# EUROPEAN PATENT SPECIFICATION

(11) **EP 3 389 036 B1**
(45) Date of publication and mention of the grant of the patent: **29.07.2020**
(21) Application number: 18305461.8
(22) Date of filing: 13.04.2018
(51) Int. Cl.: G09G 3/16, G09G 3/04

(54) **BISTABLE DISPLAY AND DRIVING METHOD THEREOF**
BISTABILE ANZEIGE UND ANSTEUERUNGSVERFAHREN DAFÜR
AFFICHAGE BISTABLE ET PROCÉDÉ D'ENTRAÎNEMENT CORRESPONDANT

(30) Priority: 14.04.2017 CN 201710243318
(43) Date of publication of application: 17.10.2018
(73) Proprietor: Schneider Electric Industries SAS, 92500 Rueil-Malmaison (FR)
(72) Inventor: FEI, Weihe, Shanghai, Shanghai 201203 (CN); ZHANG, Fenglian, Shanghai, Shanghai 201203 (CN); MOLITON, Vivien, 38050 Grenoble Cedex 9 (FR); RAULIN, Pierre, 38050 Grenoble Cedex 9 (FR)
(74) Representative: Manitz Finsterwald Patent- und Rechtsanwaltspartnerschaft mbB

(56) References cited:
- JP-A- 2010 078 762
- US-A1- 2008 212 165

## Description

### TECHNICAL FIELD OF THE DISCLOSURE

The present disclosure relates to a bistable display and a driving method thereof, and in particular to a dual-electrode driven bistable display and a driving method thereof. JP 2010 078762 A and US 2008 0212 165 A1 disclose a known electrophoretic panel and a known bistable display, respectively.

### BACKGROUND

There is a display application in the electrical switch protection circuit. When the circuit system fails, the display can indicate the type of the failure, and this indication state can be maintained in a power-off state, that is, the display can maintain the displayed pattern in the case when there is no power supply. Such display is named as bistable display. The entire display plane of the bistable display is treated as a pixel with being led out by two electrodes, and in this way it can be used as a bistable indicator light. Since it does not require power to maintain the indication, it is of high utility in electrical switch indications. As a functional extension of such display, we can print a pattern on the display, and a bistable indicator light with specific indication significance can be made out.

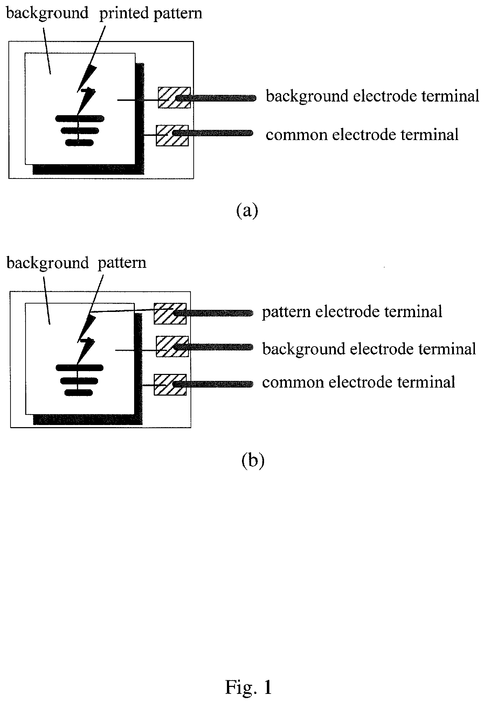

In order to make the bistable display display a specific pattern, currently there are two realization methods. The first one is to print a pattern on the surface of the display. As shown in FIG.1(a), the color of the pattern is the same as the background color in the dark state of the display. The printed pattern can be thereby displayed when the display is in the bright state (the first stable state of the display). Its disadvantage is that since the bistable display has certain optical reflections in the dark state (the second stable state of the display), the actual effect of the printed pattern cannot be completely consistent with the background color of the display in the dark state, resulting in that the display can vaguely show the printed pattern even in a dark state and that the printed pattern has reliability risks such as breakage, peeling or the like. The second method is to lead out a separate pattern electrode in the display which composes, together with background electrode and display common electrode, a three-electrode input driving way, as shown in Fig.1(b). Its disadvantage is that although it can improve the display effect of the pattern, due to one additional set of driver circuits, it is incompatible with the previous driver circuits and increases the cost of the driver circuits.

### SUMMARY

The present disclosure has been made in view of the above problems. The purpose of the present disclosure is to propose an electronic design of a bistable display so that the display displays a specific pattern while still keeping the two electrodes led out without the need to print a pattern on the surface of the display, so as to improve the visual effect and the reliability of the display. The invention is set out in the appended claims.

The present disclosure provides a bistable display, comprising: an inner box constituted of a first substrate, a second substrate and a box body surrounding space between the first substrate and the second substrate, wherein a bistable display material is injected into the space, and one or more of the common electrode conductive layer, the pattern conductive layer, and the background conductive layer are respectively formed on the first substrate and/or the second substrate inside the inner box, and the common electrode conductive layer is led out of the inner box through a common electrode, the pattern conductive layer is led out of the inner box through a pattern electrode, and the background conductive layer is led out of the inner box through a background electrode.

The above bistable display according to the present disclosure can make the pattern to be presented by the display be inside the display by using a pattern display layer inside the display, and thus has high reliability and has no problem such as pattern breakage, peeling or the like.

The above bistable display of the present disclosure further comprises: a common electrode terminal connected with the common electrode; and a signal electrode terminal connected with the background electrode and/or the pattern electrode, wherein a pulse signal including a pulse of a first voltage higher than a first stable state (a bright state) drive voltage of the display and a pulse of a second voltage lower than the first stable state drive voltage of the display but higher than the second stable state (the dark state) drive voltage of the display is applied between the common electrode terminal and the signal electrode terminal.

Due to having a dual-electrode driving structure, the above bistable display according to the present disclosure can be compatible with the original circuit without increasing the cost of the driver circuit and modifying the original driver circuit.

The above bistable display of the present disclosure connects the background electrode, the pattern electrode and the common electrode in series between the signal electrode terminal and the common electrode terminal through a voltage dividing component to form a voltage divider circuit, the voltage dividing component being comprised of one or more of an external capacitor, an internal capacitor, a resistor, and a voltage regulator tube.

Due to providing the driving signal, after being divided by using the voltage divider circuit formed in many ways, to each electrode, the above bistable display according to the present disclosure may produce many kinds of display effects by using one driving signal.

The above bistable display of the present disclosure directly applies the driving signal to one of the background electrode and the pattern electrode and applies the driving signal of a first divided voltage obtained after the voltage division by the voltage divider circuit to the other one of the background electrode and the pattern electrode, when a driving signal is applied between the common electrode terminal and the signal electrode terminal, and adjusts the value of the voltage dividing component in the voltage divider circuit and/or values of the first voltage and the second voltage so that the first divided voltage applied to the other one of the background electrode and the pattern electrode is lower than the first stable state drive voltage of the display and higher than the second stable state drive voltage of the display when the driving signal is the pulse of the first voltage, and the first divided voltage applied to the other one of the background electrode and the pattern electrode is lower than the first stable state drive voltage of the display and higher than the second stable state drive voltage of the display when the driving signal is the pulse of the second voltage.

The above bistable display according to the present disclosure may provide suitable voltages for respective electrodes by combining the voltage divider circuit and the voltage adjustment range of the driving signal.

The present disclosure further provides a driving method of a bistable display, for driving the above bistable display, the method comprising steps of: when a driving signal is applied between the common electrode terminal and the signal electrode terminal, directly applying the driving signal to one of the background electrode and the pattern electrode, and applying the driving signal of a first divided voltage obtained after the voltage division by the voltage divider circuit to the other one of the background electrode and the pattern electrode; and adjusting the value of the voltage dividing component in the voltage divider circuit and/or values of the first voltage and the second voltage so that the first divided voltage applied to the other one of the background electrode and the pattern electrode is lower than the first stable state drive voltage of the display and higher than the second stable state drive voltage of the display when the driving signal is the pulse of the first voltage, and the first divided voltage applied to the other one of the background electrode and the pattern electrode is lower than the first stable state drive voltage of the display and higher than the second stable state drive voltage of the display when the driving signal is the pulse of the second voltage.

The above driving method of the bistable display according to the present disclosure may provide suitable voltages for respective electrodes by combining the voltage divider circuit and the voltage adjustment range of the driving signal.

The present disclosure further provides a driving method of a bistable display, the method comprising steps of: directly connecting the signal electrode terminal with the first pattern electrode, and providing the voltage of the driving signal to the first pattern electrode directly; and providing the first divided voltage obtained after dividing the voltage of the driving signal by the first external capacitor to the second pattern electrode, and providing the second divided voltage obtained after dividing the voltage of the driving signal by the first external capacitor and the second external capacitor to the background electrode; and adjusting the values of the first external capacitor and the second external capacitor in the voltage divider circuit while dividing the voltage amplitude of the driving signal into 3 levels or more, and in a case that the voltage amplitude is of 3 levels, setting them as the first voltage, the third voltage and the second voltage respectively in the descending order with the third voltage being less than the first voltage and greater than the first stable state drive voltage of the display, so that it becomes one of the following three cases: when the driving signal is the pulse of the first voltage, the first voltage is directly applied to the first pattern electrode, the voltage applied to the second pattern electrode is lower than the first voltage but higher than the first stable state drive voltage of the display, and the voltage applied to the background electrode is lower than the first stable state drive voltage of the display and higher than the second stable state drive voltage of the display; when the driving signal is the pulse of the third voltage, the third voltage is directly applied to the first pattern electrode, the voltage applied to the second pattern electrode is lower than the first stable state drive voltage of the display and higher than the second stable state drive voltage of the display, and the voltage applied to the background electrode is lower than the first stable state drive voltage of the display and higher than the second stable state drive voltage of the display; or when the driving signal is the pulse of the second voltage, the second voltage is directly applied to the first pattern electrode, the voltage applied to the second pattern electrode is lower than the first stable state drive voltage of the display and higher than the second stable state drive voltage of the display, and the voltage applied to the background electrode is lower than the first stable state drive voltage of the display and higher than the second stable state drive voltage of the display.

Due to providing the driving signal, after being divided by using the voltage divider circuit formed in many ways, to each electrode, the above driving method of the bistable display according to the present disclosure may produce many kinds of display effects by using one driving signal and realize the display of two or more bistable patterns.

In summary, the present disclosure has the following characteristics:
1. Both the pattern display area and the background display area of the bistable display are composed of conductive layers inside the display. Two internal electrodes are respectively formed. The driving signal of the display is directly connected with one of the internal electrodes, and is indirectly connected with the other one of the internal electrodes through the voltage divider circuit. From the appearance point of view, there is only one signal input electrode, which composes a dual-electrode drive input way together with the other external electrode, i.e. the common electrode, of the display.
2. The voltage divider circuit as described above can have a variety of design methods. The present disclosure provides four voltage divider circuit implementation methods, which are an external capacitor method, an internal capacitor method, a voltage divider resistor method, and a voltage regulator tube method respectively.
3. Using the dual-electrode drive input way as described above in combination with the multi-level signal driving method, the display of two or more bistable patterns can also be realized.

### Technical Effect

The disclosure can solve the technical problems of eliminating the unsatisfactory visual display effect of the current bistable displays due to using printed patterns and eliminating the potential risks such as falling, breakage or the like of the printed patterns, thereby play a role in improving the visual display effect of the display and improving the reliability of the display.

### BRIEF DESCRIPTION OF THE DRAWINGS

From the following description of specific embodiments of the present disclosure taken in conjunction with the attached drawings, other advantages and features will become more clear and apparent. These specific embodiments are only for non-limiting purposes, and are shown in the attached drawings. In the attached drawings, the same reference numerals are used to denote the same components or units, in which:
Fig.1 is an pattern display method of an existing bistable display, in which Fig.1(a) shows a pattern printing method and Fig.1(b) shows a three-electrode method.
Fig.2 is a principle block diagram showing a bistable display.
Fig.3 is a schematic diagram of a concrete bistable display, in which Fig.3(a) is a schematic diagram showing that the display is "bright" and Fig.3(b) is a schematic diagram showing that the display is "dark".
Fig.4 is a waveform diagram of the first stable state (the bright state) and the second stable state (the dark state) driving voltages of a bistable display.
Fig.5 is a principle diagram of making the voltage divider capacitor inside the display.
Fig.6 is a principle diagram of a dual-electrode driving that uses a voltage divider resistor to realize a bistable pattern display.
Fig.7 is a principle diagram of a dual-electrode driving that uses a voltage regulator tube to realize a bistable pattern display.
Fig.8 is a principle diagram of a bistable display driven by two pattern segment voltages.
Fig.9 is a waveform schematic diagram of an electrode signal driven by two pattern segment voltages.
Fig.10 is a flowchart showing an example of a driving method of a bistable display.
Fig.11 is a flowchart showing another example of a driving method of a bistable display.

### DETAILED DESCRIPTION

Specific embodiments of the present disclosure will be described below in more detail with reference to the attached drawings. Although the attached drawings show multiple specific embodiments of the present disclosure, it should be understood that the present disclosure may be implemented in various forms and should not be limited by the embodiments described herein. Rather, these embodiments are provided so that this disclosure will be understood more thoroughly and completely, and the scope of the present disclosure may be fully conveyed to those skilled in the art.

### First Embodiment

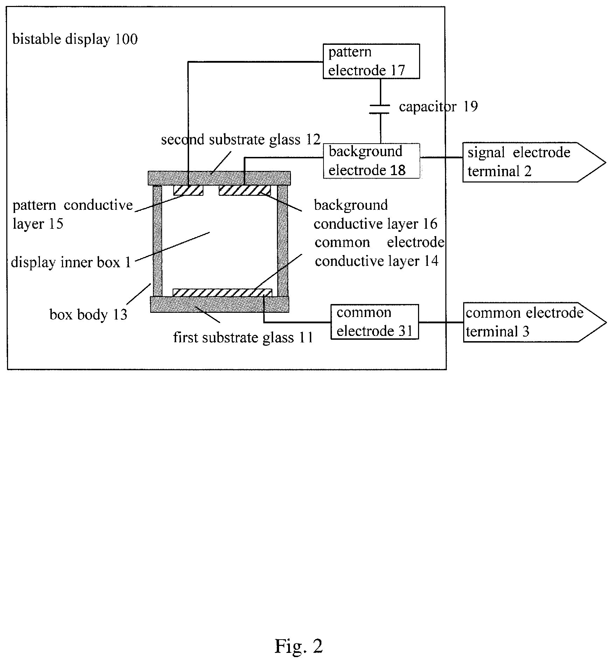

The first embodiment is an embodiment of a voltage divider circuit implementing the driving of the bistable displaying by using external capacitor method. In the following, the description will be made with reference to Figs.2 to 4.

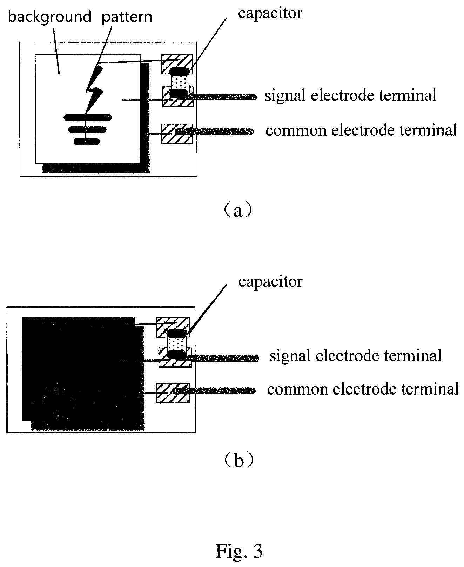

Fig.2 is a principle block diagram of a bistable display. For ease of understanding, Fig. 3 shows a schematic diagram of a concrete bistable display.

A bistable display 100 is composed of one bistable display inner box 1 and two lead terminals. The two lead terminals are a signal electrode terminal 2 and a common electrode terminal 3 respectively. The bistable display inner box 1 is composed of two substrate glasses, i.e., a first substrate glass 11 and a second substrate glass 12, a box body 13 surrounding a space between the first substrate glass and the second substrate glass, and a bistable display material, constituted of, for example, a bistable liquid crystal or the like, injected into the box. The first substrate glass 1 is plated with a common electrode conductive layer 14, and a common electrode 31 is led out of the box and is connected with a common electrode lead terminal 3. The second substrate glass 12 is plated with a pattern conductive layer 15 and a background conductive layer 16, which are led out of the box as a pattern electrode 17 and a background electrode 18 respectively. As can be seen from Fig.2, a plate capacitor is formed between the pattern conductive layer 15 and the common electrode conductive layer 14, and between the background conductive layer 16 and the common electrode conductive layer 14, respectively. In the design of Fig.2, the background electrode 18 is connected with the signal electrode terminal 2, and there is a voltage divider capacitor 19 between the background electrode 18 and the pattern electrode 17.

The working principle of such design is as follows. After one pulse of a high amplitude is input between the signal electrode terminal 2 and the common electrode terminal 3, the voltage amplitude is set as VH (a first voltage) which is greater than a first stable state drive voltage VON of the bistable display. Since the signal electrode terminal 2 is connected with the background electrode 18, the area of the background conductive layer 16 obtains the pulse of the voltage VH and exhibits first stable state display, i.e., a colored reflection state, which produces a "lighted-up" vision under the effect of ambient light. The pattern conductive layer 15 obtains an input voltage through the voltage divider capacitor 19. The voltage divider capacitor 19 is connected in series with the plate capacitor between the pattern conductive layer 15 and the common electrode conductive layer 14. The capacitance of the voltage divider capacitor is appropriately selected such that the pulse voltage VGH of the pattern conductive layer is less than the first stable state drive voltage VON of the display and greater than the second stable state drive voltage VOFF of the display, and thus the area of the pattern conductive layer exhibits second stable state display, i.e., the dark state, and the entire display exhibits the display effect as shown in Fig.3(a). When one pulse of a low amplitude is input between the signal electrode and the common electrode, the voltage amplitude is set as VL (a second voltage) which is less than VON but greater than VOFF, and thus the area of the background conductive layer 16 exhibits second stable state display, i.e., the dark state display. The voltage VGL of the pattern conductive layer 15 is reduced correspondingly due to the series voltage dividing function of the voltage divider capacitor 19, but may still be greater than VOFF (as long as the capacitance of the voltage divider capacitor is selected appropriately, this requirement can be satisfied). As a result, the area of the pattern conductive layer 15 also exhibits second stable state display, i.e., the dark state display, and the entire display exhibit a "darkened" display effect, as shown in Fig.3(b).

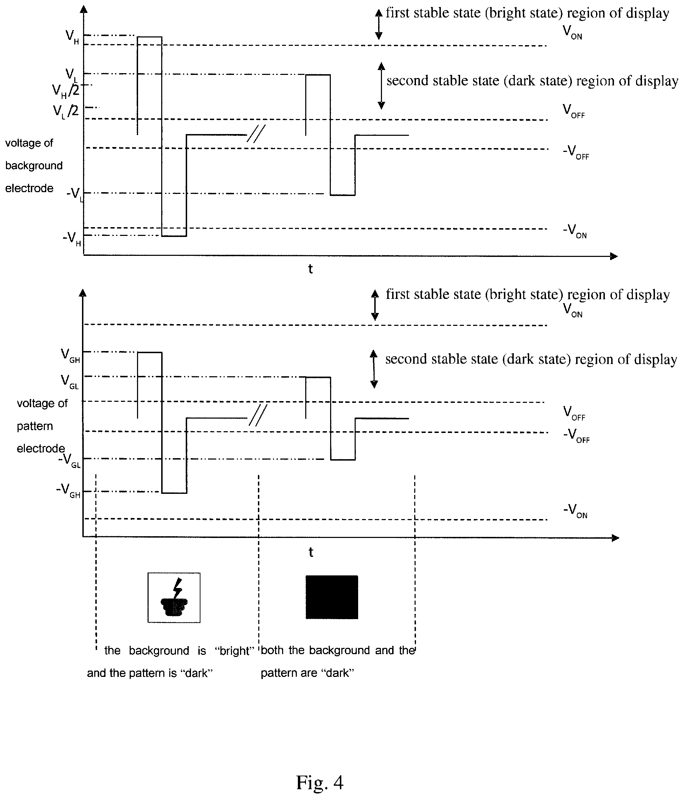

Fig.4 is a voltage waveform diagram of the bright state and the dark state of the bistable display, in which the voltage driving characteristics of the bistable display is given. As can be seen from the figure, both the bright state voltage range and the dark state voltage range of the display are relatively wide. As long as VH (the amplitude of the bright state pulse, VH>VON) and VL (the amplitude of the dark state pulse, VOFF<VL<VON) of the input driving signal are appropriately selected such that amplitudes VGH and VGL of the pulse corresponding to the pattern electrode are in the dark state region, that is, VOFF<VGH<VON and VOFF<VGL<VON, a display effect that the background is bright and the pattern is dark can be realized.

In the design of Fig.2, the signal electrode terminal 2 is connected with the background electrode 18 to produce a display effect that the background is bright and the pattern is dark. In practical applications, the signal electrode terminal 2 may also be connected with the pattern electrode 17 so as to produce a display effect that the pattern is bright and the background is dark.

### Second Embodiment

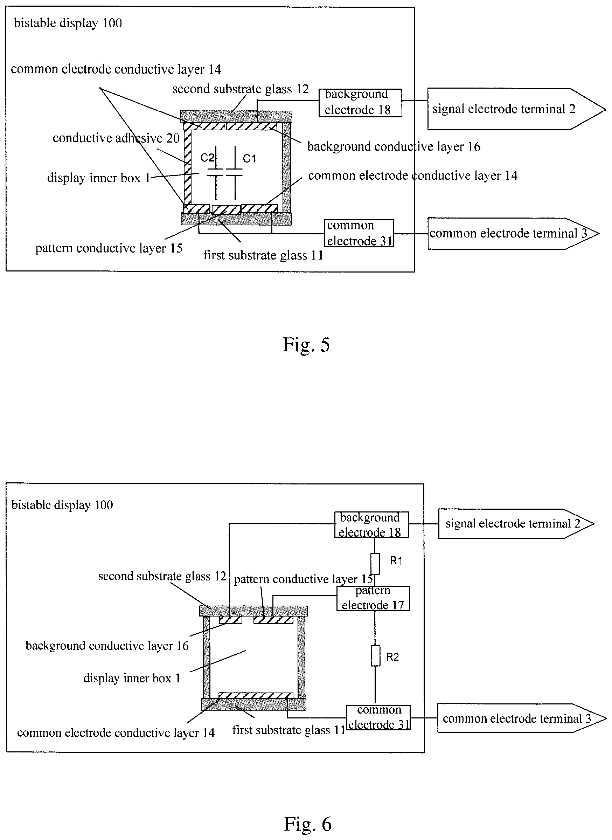

The second embodiment is an embodiment of a voltage divider circuit implementing the driving of the bistable displaying by using internal capacitor method. In the following, the description will be made with reference to Fig.5.

In the first embodiment, it is described that the voltage divider circuit between electrodes of the display is realized by an external capacitor. We can also use an internal capacitor of the display to realize the voltage divider circuit, that is, the voltage divider capacitor is made inside of the display. The internal plate capacitor is formed by the conductive layers on the two substrate glasses of the inner box of the display, so that the external voltage divider capacitor between the electrodes can be omitted.

Fig.5 is a principle diagram of a design case where a voltage divider capacitor is made inside the display. In Fig.5, the pattern conductive layer 15 is made on the first substrate glass 11 such that a part of the area of the pattern conductive layer overlaps with the background conductive layer 16 on the second substrate glass 12 in an up-down manner constituting an equivalent capacitor C1, the remaining part of the area of the pattern conductive layer overlaps with the common electrode conductive layer 14 on the second substrate glass 12 in an up-down manner constituting an equivalent capacitor C2, and the common electrode conductive layer 14 on the second substrate glass 12 and the common electrode conductive layer 14 on the first substrate glass 11 realize the up-down conduction through the conductive adhesive 20 on the frame of the inner box 1 of the display and are both connected to the common electrode 31. In this way, the equivalent capacitor C1 is equivalent to the external voltage divider capacitor in Fig.2. Between the background electrode and the common electrode, a series circuit is constituted of "the background conductive layer → the equivalent capacitor C1 → the pattern conductive layer → the equivalent capacitor C2 → the common conductive layer". We can make the equivalent capacitors C1 and C2 substantially equal by adjusting the overlapping area between the pattern conductive layer and the background conductive layer. Thus, when the pulse amplitude of the signal of the background electrode is VH (the first voltage, VH>VON), the pattern conductive layer 15 obtains a pulse signal of a pulse amplitude VGH=VH/2 due to the series voltage dividing function of C1 and C2. It can be seen from Fig. 4 that VH is appropriately selected such that VOFF<VGH<VON, and thus the background is in the first stable state display, i.e., the bright state, and the pattern is in the second stable state display, i.e., the dark state. When the pulse amplitude of the signal of the background electrode is VL (the second voltage, VOFF<VL<VON), the pattern conductive layer 15 obtains a pulse signal of a pulse amplitude VGL=VL/2 due to the series voltage dividing function of C1 and C2. VL is appropriately selected such that VOFF<VGL<VON, and thus both the background and the pattern are in the second stable state display, i.e., the dark state, thereby a display effect that the indicator light is extinguished is achieved.

### Third Embodiment

The third embodiment is an embodiment of a voltage divider circuit implementing the driving of the bistable displaying by using voltage divider resistor method. In the following, the description will be made with reference to Fig.6.

In addition to implementing a voltage division driver circuit by bridging an external capacitor between the pattern electrode and the background electrode, other electronic elements may also be bridged between the pattern electrode, the background electrode and the common electrode to play a role in voltage dividing, so as to achieve the same purpose of the present disclosure.

Fig.6 is a principle diagram of a dual-electrode driving that uses a voltage divider resistor to realize a bistable pattern display. As shown in Fig.6, the common electrode conductive layer 14 is formed on the first substrate glass 11, and the pattern conductive layer 15 and the background conductive layer 16 are formed on the second substrate glass 12.

In Fig.6, the voltage divider resistor method is employed to make the pattern electrode obtain a pulse signal of a low voltage amplitude. A resistor R1 is bridged between the background electrode 18 and the pattern electrode 17, and a resistor R2 is bridged between the pattern electrode 17 and the common electrode 31. When the driving signal (it is assumed that the amplitude is the first voltage VH, VH>VON, or the second voltage VL, VOFF<VL<VON) is input to the signal electrode terminal 2, the pattern electrode 17 obtains the driving signal of a low amplitude through the voltage divider resistors R1 and R2. Appropriate values of R1 and R2 are selected such that the amplitudes VGH and VGL (corresponding to VH and VL, respectively) of the signal on the pattern electrode 17 satisfy the following inequalities: VOFF<VG<VH and VOFF<VGL<VON, thereby it can be achieved that the pattern is in the dark state while the background is lighted up.

The bridged resistor in Fig.6 may be an external resistor or may be a resistor formed by the internal wiring of the display.

### Fourth Embodiment

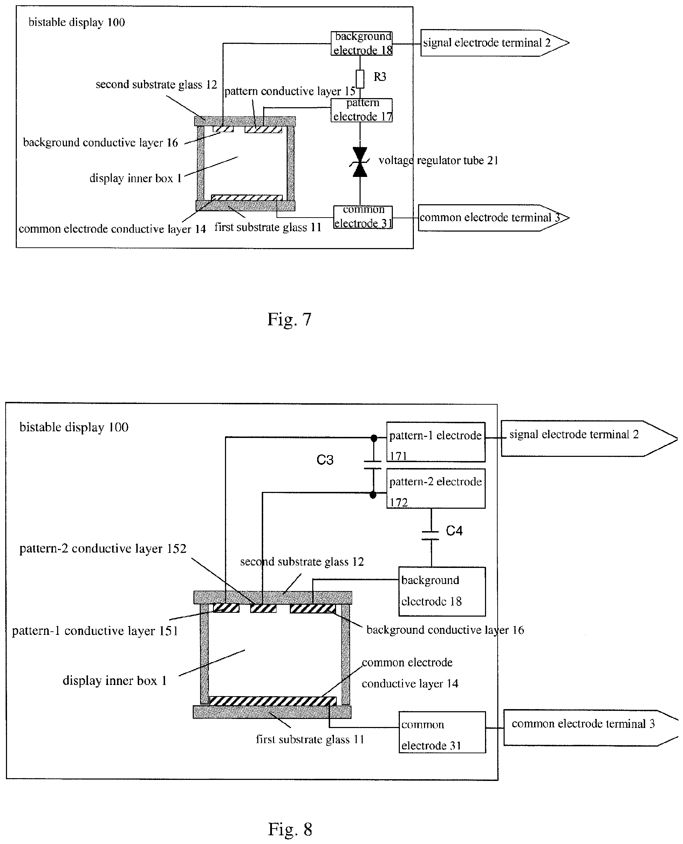

The fourth embodiment is an embodiment of a voltage divider circuit implementing the driving of the bistable displaying by using voltage regulator tube method. In the following, the description will be made with reference to Fig.7.

Fig.7 is a principle diagram of using voltage regulator tube method to realize the voltage division driving.

As shown in Fig.7, the common electrode conductive layer 14 is formed on the first substrate glass 11, and the pattern conductive layer 15 and the background conductive layer 16 are formed on the second substrate glass 12. A resistor R3 is bridged between the background electrode 18 and the pattern electrode 17, and a voltage regulator tube 21 is bridged between the pattern electrode 17 and the common electrode 31. Due to the voltage stabilizing function of the voltage regulator tube 21, the voltage of the pattern electrode 17 can be fixed at a certain dark state voltage, for example VL. When the amplitude of the input pulse is the first voltage VH, VH>VON>VL, and the background is in the bright state, while pattern electrode 17 is subject to the voltage regulator tube 21, and its voltage amplitude is limited to VL, thereby the pattern display area is in the dark state. When the amplitude of the input pulse is VL, VOFF<VL<VON, the pulse amplitudes of the signals of the background electrode and the pattern electrode are both the second voltage VL, and the background and pattern display areas are both in the dark state. The advantage of using a voltage regulator tube is that when the display is in the dark state, since pulse amplitudes of the background and pattern electrodes are the same, the background and the pattern exhibit the dark state of the same color and no chromatic aberration is caused, achieving an ideal display effect.

### Fifth Embodiment

The fifth embodiment is an embodiment of a voltage divider circuit implementing the bistable displaying of multiple patterns by using multi-level signal driving method. In the following, the description will be made with reference to Fig.8.

As an extension of the present disclosure, the design of a bistable display of two or more patterns can be implemented using the same principle. Fig.8 is a principle block diagram of a bistable display driven by two pattern segment voltages.

A design case of using dual electrodes to drive two bistable patterns will now be described by taking Fig.8 as an example. There are two patterns in the display in Fig.8, which corresponds to a pattern-1 electrode 171 and a pattern-2 electrode 172, respectively. An external capacitor C3 is bridged between the two pattern electrodes, and an external capacitor C4 is bridged between the pattern-2 electrode 172 and the background electrode 18. A multi-level pulse voltage driving method is used on the signal electrode terminal 2. In this example, three levels of pulse amplitudes of the signal, namely VH1 (the first voltage), VH2 (the third voltage), and VL (the second voltage) respectively, are used to satisfy inequalities:
VH1>VH2>VON,
VOFF<VL< VON.

The driving signal is transmitted to the pattern-2 electrode 172 through the capacitor C3. Due to the voltage dividing function of the capacitor, the pulse amplitude of the signal obtained on the pattern-2 electrode 172 is VG1, VG2 (corresponding to VH1, VH2 respectively). The driving signal on the pattern-2 electrode 172 is also transmitted to the background electrode 18 through the capacitor C4, so that the pulse amplitude of the signal on the background electrode 18 becomes VB1, VB2 (corresponding to VG1, VG2 respectively). Appropriate capacitances of C1 and C2 is selected to satisfy the following inequalities:
VG1>VON,
VOFF<VGL<VG2<VON,
VOFF<VBL<VB2<VB1<VON.

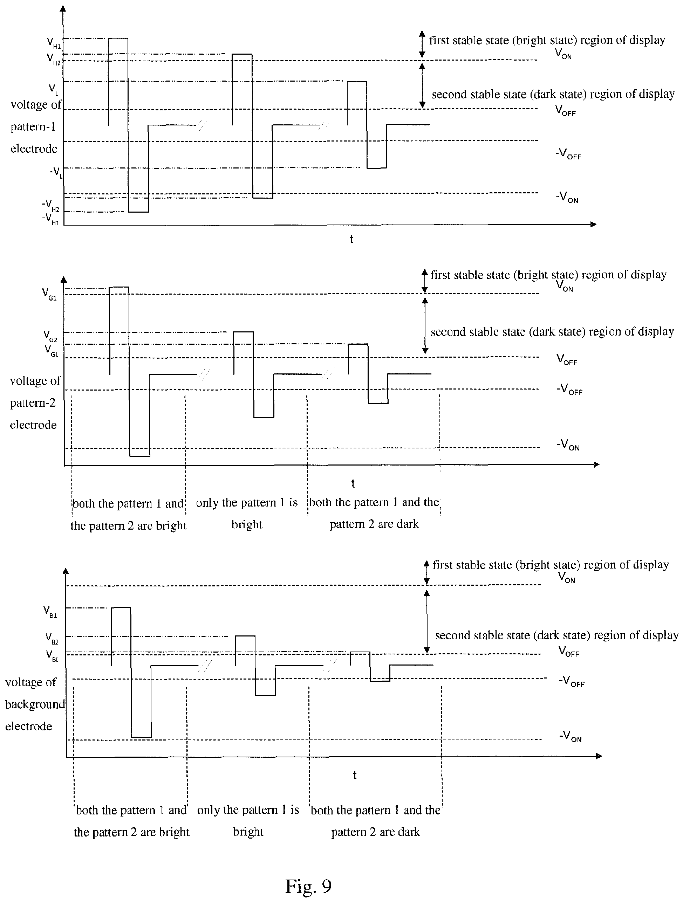

Fig.9 is a waveform schematic diagram of an electrode signal driven by two pattern segment voltages. The signal waveforms that satisfy the above inequalities are shown in Fig.9. In this way, when the amplitude of the input pulse signal is VH1, the pattern 1 and the pattern 2 are simultaneously in the bright state while the background is in the dark state; when the amplitude of the input pulse signal is VH2, only the pattern 1 is in the bright state, and the pattern 2 and the background are in the dark state; when the amplitude of the input pulse signal is VL, the pattern 1, the pattern 2 and the background are all in the dark state because VL<VON. In this way, the purpose of using two electrodes to drive multiple bistable patterns is achieved. The design of Fig.8 is just one example of implementing the dual-electrode driving using this kind of method. Various similar designs all belong to the protection scope of the present disclosure.

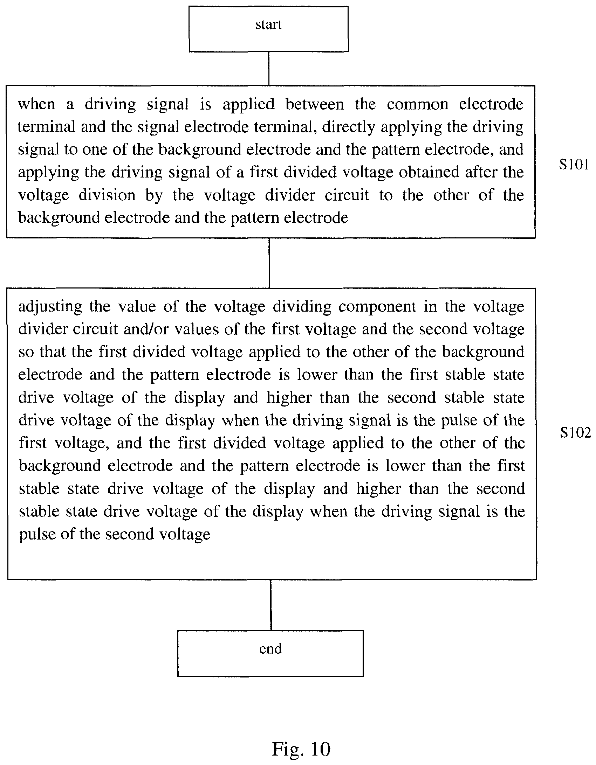

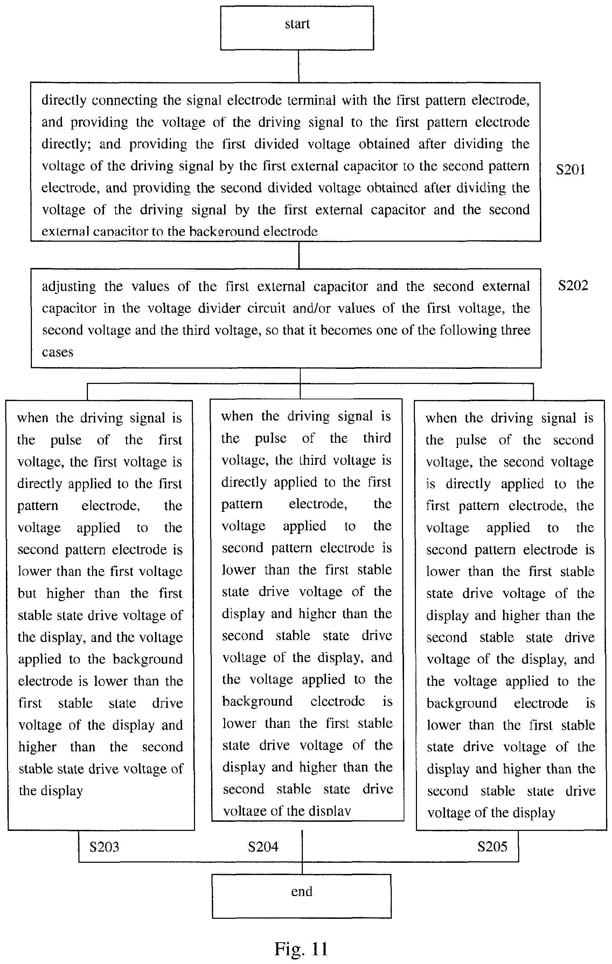

In the following, a flowchart of a driving method of a bistable display is explained with reference to Fig.10 and Fig.11.

Fig.10 is a flowchart showing an example of a driving method of a bistable display. The driving method is applicable to the bistable displays in the first to fourth embodiments as described above.

First, in step S101, when a driving signal is applied between the common electrode terminal and the signal electrode terminal, the driving signal is directly applied to one of the background electrode and the pattern electrode, and the driving signal of a first divided voltage obtained after the voltage division by the voltage divider circuit is applied to the other one of the background electrode and the pattern electrode.

Then, the value of the voltage dividing component in the voltage divider circuit and/or values of high amplitude pulse and low amplitude pulse are adjusted so that the first divided voltage applied to the other one of the background electrode and the pattern electrode is lower than the first stable state drive voltage of the display and higher than the second stable state drive voltage of the display when the driving signal is high amplitude pulse, and the first divided voltage applied to the other one of the background electrode and the pattern electrode is lower than the first stable state drive voltage of the display and higher than the second stable state drive voltage of the display when the driving signal is the pulse of the second voltage.

The above driving method of the bistable display according to the present disclosure may provide suitable voltages for respective electrodes by combining the voltage divider circuit and the voltage adjustment range of the driving signal.

Fig.11 is a flowchart showing another example of a driving method of a bistable display. The above flowchart is applicable to the bistable display of the fifth embodiment.

First, in step S201, the signal electrode terminal is directly connected with the first pattern electrode, and the voltage of the driving signal is provided to the first pattern electrode directly; and the first divided voltage obtained after dividing the voltage of the driving signal by the first external capacitor is provided to the second pattern electrode, and the second divided voltage obtained after dividing the voltage of the driving signal by the first external capacitor and the second external capacitor is provided to the background electrode.

Then, the values of the first external capacitor and the second external capacitor in the voltage divider circuit is adjusted while dividing the voltage amplitude of the driving signal into 3 levels or more, and in a case that the voltage amplitude is of 3 levels, they are set as the first voltage, a third voltage and the second voltage respectively in the descending order with the third voltage being less than the first voltage and greater than the first stable state drive voltage of the display, so that it becomes one of the following three cases:

S203: when the driving signal is the pulse of the first voltage, the first voltage is directly applied to the first pattern electrode, the voltage applied to the second pattern electrode is lower than the first voltage but higher than the first stable state drive voltage of the display, and the voltage applied to the background electrode is lower than the first stable state drive voltage of the display and higher than the second stable state drive voltage of the display.

S204: when the driving signal is the pulse of the third voltage, the third voltage is directly applied to the first pattern electrode, the voltage applied to the second pattern electrode is lower than the first stable state drive voltage of the display and higher than the second stable state drive voltage of the display, and the voltage applied to the background electrode is lower than the first stable state drive voltage of the display and higher than the second stable state drive voltage of the display.

S205: when the driving signal is the pulse of the second voltage, the second voltage is directly applied to the first pattern electrode, the voltage applied to the second pattern electrode is lower than the first stable state drive voltage of the display and higher than the second stable state drive voltage of the display, and the voltage applied to the background electrode is lower than the first stable state drive voltage of the display and higher than the second stable state drive voltage of the display.

Due to providing the driving signal after being divided by using the voltage divider circuit formed in many ways to respective electrodes, the above driving method of the bistable display according to the present disclosure may produce many kinds of display effects by using one driving signal and realize the display of two or more bistable patterns.

The connection relationships and the constituent relationships of the respective units (functional modules, chips, etc.) in various embodiments of the present disclosure do not limit the protection scope of the present disclosure, and they may be implemented by being combined into a single unit, or specific units thereof may also be implemented by being divided into multiple units of smaller functionality.

Each block diagram in the attached drawings shows the structure, function, and operation that may be implemented by a PLC apparatus according to an embodiment of the present disclosure. In this regard, each block in the block diagram may represent a module that includes one or more executable instructions for implementing specified logical functions. In alternative implementations, the functions denoted in the blocks may also occur in a different order than that denoted in the attached drawings. For example, two consecutive blocks may actually be performed substantially in parallel, and they may sometimes be performed in the reverse order, depending on the function involved. It should also be noted that each block in the block diagram may be implemented with a dedicated hardware-based ASIC that performs a specified function or action, or may be implemented with a combination of dedicated hardware and computer instructions.

Various embodiments of the present disclosure have been described above, and the above description is exemplary, not exhaustive, and is not limited to the various embodiments disclosed. Many modifications and variations will be apparent to those of ordinary skill in the art without departing from the scope of the appended claims. The choice of terminology used herein is intended to best explain the principles of the various embodiments, the practical applications or improvements of techniques in the market, or to enable others of ordinary skill in the art to understand the various embodiments disclosed herein.

### Industrial Applicability

The electronic design of the bistable display allows the display to display a specific pattern while still keeping the two electrodes led out of the display without the need to print a pattern on the surface of the display, so as to improve the visual display effect and the reliability of the display.

### Description of Reference Numerals

- 100: bistable display
- 1: display inner box
- 2: signal electrode terminal
- 3: common electrode terminal
- 11: first substrate glass
- 12: second substrate glass
- 13: box body
- 14: common electrode conductive layer
- 15: pattern conductive layer
- 16: background conductive layer
- 17: pattern electrode
- 18: background electrode
- 19: capacitor
- 20: conductive adhesive
- 21: voltage regulator tube
- 31: common electrode
- 151: pattern-1 conductive layer
- 152: pattern-2 conductive layer
- 171: pattern-1 electrode
- 172: pattern-2 electrode
- C1, C2, C3, C4: capacitor
- R1, R2, R3: resistor

## Claims

1. A bistable display, comprising:
an inner box (1) constituted of a first substrate (11), a second substrate (12) and a box body (13) surrounding a space between the first substrate and the second substrate,
a bistable display material injected into the space, and a common electrode conductive layer (14), a pattern conductive layer (15), and a background conductive layer (16) respectively formed on the first substrate and/or the second substrate inside the inner box,
wherein the common electrode conductive layer is led out of the inner box through a common electrode (31), the pattern conductive layer is led out of the inner box through a pattern electrode (17), and the background conductive layer is led out of the inner box through a background electrode (18),
wherein the bistable display further comprises:
a common electrode terminal (3) directly connected with the common electrode; and
a signal electrode terminal (2) directly connected with one of the background electrode and the pattern electrode, wherein the bistable display is configured to receive a driving signal including a pulse of a first voltage higher than a first stable state drive voltage of the display, suitable for driving the bistable display in a bright display state, and a pulse of a second voltage lower than the first stable state drive voltage of the display and higher than a second stable state drive voltage of the display, suitable for driving the bistable display in a dark display state, the driving signal being applied between the common electrode terminal and the signal electrode terminal,
**characterized in that**:
the one of the background and the pattern electrode, the other one of the background and the pattern electrode, and the common electrode are connected in series between the signal electrode terminal and the common electrode terminal through a voltage dividing component (19) included in the bistable display to form a voltage divider circuit,
the voltage dividing component comprising one or more of an external capacitor, an internal capacitor, a resistor, and a voltage regulator tube, so that,
when said driving signal is applied between the common electrode terminal and the signal electrode terminal, the driving signal is directly applied to said one of the background electrode and the pattern electrode, and a first divided voltage resulting from the voltage division of the driving signal by the voltage divider circuit is applied to the other one of the background electrode and the pattern electrode,
wherein the value of the voltage dividing component in the voltage divider circuit is adjusted so that the first divided voltage applied to the other one of the background electrode and the pattern electrode is lower than the first stable state drive voltage of the display and higher than the second stable state drive voltage of the display when the driving signal is the pulse of the first voltage, and the first divided voltage applied to the other one of the background electrode and the pattern electrode is also lower than the first stable state drive voltage of the display and higher than the second stable state drive voltage of the display when the driving signal is the pulse of the second voltage.

2. The bistable display according to claim 1, **characterized in that** the common electrode conductive layer is formed on the glass of the first substrate, and the pattern conductive layer and the background conductive layer are formed on the glass of the second substrate,
the voltage divider circuit is formed by connecting a voltage divider capacitor connected between the background electrode and the pattern electrode and a plate capacitor formed between the pattern electrode and the common electrode in series,
the signal electrode terminal is directly connected with the background electrode and provides the voltage of the driving signal to the background electrode; and the signal electrode terminal is indirectly connected with the pattern electrode through the voltage divider capacitor and provides the first divided voltage to the pattern electrode.

3. The bistable display according to claim 1, **characterized in that** the pattern conductive layer is formed on the glass of the first substrate so that a part of the area of the pattern conductive layer overlaps with the background conductive layer formed on the glass of the second substrate in an up-down manner constituting a first equivalent capacitor, the remaining part of the area of the pattern conductive layer overlaps with the common electrode conductive layer formed on the glass of the second substrate in an up-down manner constituting a second equivalent capacitor, and the common electrode conductive layer on the glass of the second substrate and the common electrode conductive layer on the glass of the first substrate realize the up-down conduction through the conductive adhesive on the frame of the inner box of the display and are both connected with the common electrode,
the voltage divider circuit is formed by connecting the first equivalent capacitor between the background conductive layer and the pattern conductive layer and the second equivalent capacitor between the pattern conductive layer and the common conductive layer in series.

4. The bistable display according to claim 1, **characterized in that** the common electrode conductive layer is formed on the glass of the first substrate, and the pattern conductive layer and the background conductive layer are formed on the glass of the second substrate,
the voltage divider circuit is formed by connecting a first resistor bridged between the background electrode and the pattern electrode and a second resistor bridged between the pattern electrode and the common electrode in series.

5. The bistable display according to claim 1, **characterized in that** the common electrode conductive layer is formed on the glass of the first substrate, and the pattern conductive layer and the background conductive layer are formed on the glass of the second substrate,
the voltage divider circuit is formed by connecting a third resistor bridged between the background electrode and the pattern electrode and a voltage regulator tube bridged between the pattern electrode and the common electrode in series.

6. The bistable display according to claim 1, **characterized in that** a first pattern conductive layer and a second pattern conductive layer are formed on the glass of the second substrate, the first pattern conductive layer being connected with a first pattern electrode and the second pattern conductive layer being connected with a second pattern electrode,
the voltage divider circuit is formed by connecting a first external capacitor bridged between the first pattern electrode and the second pattern electrode, a second external capacitor bridged between the second pattern electrode and the background electrode, and a plate capacitor formed between the background electrode and the common electrode in series,
the signal electrode terminal is directly connected with the first pattern electrode, and provides the voltage of the driving signal to the first pattern electrode; and the first divided voltage obtained after dividing the voltage of the driving signal by the first external capacitor is provided to the second pattern electrode, and the second divided voltage obtained after dividing the voltage of the driving signal by the first external capacitor and the second external capacitor is provided to the background electrode,
the values of the first external capacitor and the second external capacitor in the voltage divider circuit are adjusted while dividing the voltage amplitude of the driving signal into 3 levels or more, and in a case that the voltage amplitude is of 3 levels, they are set as a first voltage, a third voltage and a second voltage respectively in the descending order with the third voltage being less than the first voltage and greater than the first stable state drive voltage of the display, so that it becomes one of the following three cases:
when the driving signal is the pulse of the first voltage, the first voltage is directly applied to the first pattern electrode, the voltage applied to the second pattern electrode is lower than the first voltage but higher than the first stable state drive voltage of the display, and the voltage applied to the background electrode is lower than the first stable state drive voltage of the display and higher than the second stable state drive voltage of the display;
when the driving signal is the pulse of the third voltage, the third voltage is directly applied to the first pattern electrode, the voltage applied to the second pattern electrode is lower than the first stable state drive voltage of the display and higher than the second stable state drive voltage of the display, and the voltage applied to the background electrode is lower than the first stable state drive voltage of the display and higher than the second stable state drive voltage of the display; or
when the driving signal is the pulse of the second voltage, the second voltage is directly applied to the first pattern electrode, the voltage applied to the second pattern electrode is lower than the first stable state drive voltage of the display and higher than the second stable state drive voltage of the display, and the voltage applied to the background electrode is lower than the first stable state drive voltage of the display and higher than the second stable state drive voltage of the display.

7. A driving method of the bistable display according to any one of claims 1-6, the method comprising:
applying said driving signal between said common electrode terminal and said signal electrode terminal.

## Patentansprüche

1. Bistabile Anzeige, umfassend:
einen inneren Kasten (1), der aus einem ersten Substrat (11), einem zweiten Substrat (12) und einem Kastenkörper (13) besteht, der einen Raum zwischen dem ersten Substrat und dem zweiten Substrat umgibt,
ein in den Raum injiziertes bistabiles Anzeigenmaterial, und eine leitfähige Schicht (14) einer gemeinsamen Elektrode, eine Schicht (15) mit einem leitfähigen Muster und eine leitfähige Hintergrundschicht (16), die jeweils auf dem ersten Substrat und/oder dem zweiten Substrat innerhalb des inneren Kastens ausgebildet sind,
wobei
die leitfähige Schicht der gemeinsamen Elektrode durch eine gemeinsame Elektrode (31) aus dem inneren Kasten herausgeführt ist, die Schicht mit einem leitfähigen Muster durch eine Musterelektrode (17) aus dem inneren Kasten herausgeführt ist und die leitfähige Hintergrundschicht durch eine Hintergrundelektrode (18) aus dem inneren Kasten herausgeführt ist,
wobei die bistabile Anzeige ferner umfasst:
einen Anschluss (3) einer gemeinsamen Elektrode, der direkt mit der gemeinsamen Elektrode verbunden ist; und
einen Signalelektrodenanschluss (2), der direkt entweder mit der Hintergrundelektrode oder der Musterelektrode verbunden ist, wobei
die bistabile Anzeige konfiguriert ist, um ein Ansteuersignal zu empfangen, das einen Impuls einer ersten Spannung, die höher ist als eine erste stabile Ansteuerspannung der Anzeige, die zum Ansteuern der bistabilen Anzeige in einem hellen Anzeigenzustand geeignet ist, und einen Impuls einer zweiten Spannung enthält, die niedriger ist als die erste stabile Ansteuerspannung der Anzeige und höher als eine zweite stabile Ansteuerspannung der Anzeige, die zum Ansteuern der bistabilen Anzeige in einem dunklen Anzeigezustand geeignet ist, wobei das Ansteuersignal zwischen dem Anschluss der gemeinsamen Elektrode und dem Signalelektrodenanschluss angelegt wird,
**dadurch gekennzeichnet, dass**
sowohl die Hintergrundelektrode als auch die Musterelektrode, sowie die gemeinsame Elektrode zwischen dem Signalelektrodenanschluss und dem Anschluss der gemeinsamen Elektrode durch eine Spannungsteilerkomponente (19), die in der bistabilen Anzeige enthalten ist, in Reihe geschaltet sind, um eine Spannungsteilerschaltung zu bilden,
die Spannungsteilerkomponente einen externen Kondensator, und/oder einen internen Kondensator, und/oder einen Widerstand und/oder eine Stabilisatorröhre umfasst, so dass
wenn das Ansteuersignal zwischen dem Anschluss der gemeinsamen Elektrode und dem Signalelektrodenanschluss angelegt wird, das Ansteuersignal direkt entweder an die Hintergrundelektrode oder die Musterelektrode angelegt wird, und eine erste geteilte Spannung, die aus der Spannungsteilung des Ansteuersignals durch die Spannungsteilerschaltung resultiert, an die jeweils andere Elektrode, d.h. die Hintergrundelektrode oder die Musterelektrode, angelegt wird,
wobei der Wert der Spannungsteilerkomponente in der Spannungsteilerschaltung so eingestellt ist, dass die erste geteilte Spannung, die an die jeweils andere der Hintergrundelektrode und der Musterelektrode angelegt wird, niedriger als die erste stabile Ansteuerspannung der Anzeige und höher als die zweite stabile Ansteuersteuerspannung der Anzeige ist, wenn das Ansteuersignal der Impuls der ersten Spannung ist, und die erste geteilte Spannung, die an die jeweils andere der Hintergrundelektrode und der Musterelektrode angelegt wird, ebenfalls niedriger als die erste stabile Ansteuerspannung der Anzeige und höher als die zweite stabile Ansteuerspannung der Anzeige ist, wenn das Ansteuersignal der Impuls der zweiten Spannung ist.

2. Bistabile Anzeige nach Anspruch 1,
**dadurch gekennzeichnet, dass**
die leitfähige Schicht der gemeinsamen Elektrode auf dem Glas des ersten Substrats ausgebildet ist, und die Schicht mit einem leitfähigen Muster und die leitfähige Hintergrundschicht auf dem Glas des zweiten Substrats ausgebildet sind,
die Spannungsteilerschaltung ausgebildet wird, indem ein Spannungsteilerkondensator, der zwischen die Hintergrundelektrode und die Musterelektrode geschaltet ist, und ein Plattenkondensator, der zwischen der Musterelektrode und der gemeinsame Elektrode ausgebildet ist, in Reihe geschaltet werden,
der Signalelektrodenanschluss mit der Hintergrundelektrode direkt verbunden ist und die Spannung des Ansteuersignals an die Hintergrundelektrode liefert; und der Signalelektrodenanschluss durch den Spannungsteilerkondensator indirekt mit der Musterelektrode verbunden ist und die erste geteilte Spannung an die Musterelektrode liefert.

3. Bistabile Anzeige nach Anspruch 1,
**dadurch gekennzeichnet, dass**
die Schicht mit einem leitfähigen Muster auf dem Glas des ersten Substrats so ausgebildet ist, dass sich ein Teil der Fläche der Schicht mit einem leitfähigen Muster mit der auf dem Glas des zweiten Substrats ausgebildeten leitfähigen Hintergrundschicht von oben nach unten überlappt, wodurch ein erster äquivalenter Kondensator gebildet wird, wobei sich der verbleibende Teil der Fläche der Schicht mit einem leitfähigen Muster mit der auf dem Glas des zweiten Substrats ausgebildeten leitfähigen Schicht der gemeinsamen Elektrode von oben nach unten überlappt, wodurch ein zweiter äquivalenter Kondensator gebildet wird, und die leitfähige Schicht der gemeinsamen Elektrode auf dem Glas des zweiten Substrats und die leitfähige Schicht der gemeinsamen Elektrode auf dem Glas des ersten Substrats die Leitung von oben nach unten durch den leitfähigen Klebstoff auf dem Rahmen des inneren Kastens der Anzeige realisieren und beide mit der gemeinsamen Elektrode verbunden sind,
die Spannungsteilerschaltung ausgebildet wird, indem der erste äquivalente Kondensator zwischen die leitfähige Hintergrundschicht und die Schicht mit einem leitfähigen Muster und der zweite äquivalente Kondensator zwischen die Schicht mit einem leitfähigen Muster und die gemeinsame leitfähige Schicht in Reihe geschaltet wird.

4. Bistabile Anzeige nach Anspruch 1,
**dadurch gekennzeichnet, dass**
die leitfähige Schicht der gemeinsamen Elektrode auf dem Glas des ersten Substrats ausgebildet ist, und die Schicht mit einem leitfähigen Muster und die leitfähige Hintergrundschicht auf dem Glas des zweiten Substrats ausgebildet sind,
die Spannungsteilerschaltung ausgebildet wird, indem ein erster Widerstand, der die Hintergrundelektrode und die Musterelektrode überbrückt, und ein zweiter Widerstand, der die Musterelektrode und die gemeinsame Elektrode überbrückt, in Reihe geschaltet werden.

5. Bistabile Anzeige nach Anspruch 1,
**dadurch gekennzeichnet, dass**
die leitfähige Schicht der gemeinsamen Elektrode auf dem Glas des ersten Substrats ausgebildet ist, und die Schicht mit einem leitfähigen Muster und die leitfähige Hintergrundschicht auf dem Glas des zweiten Substrats ausgebildet sind,
die Spannungsteilerschaltung ausgebildet wird, indem ein dritter Widerstand, der die Hintergrundelektrode und die Musterelektrode überbrückt, und eine Stabilisatorröhre, die die Musterelektrode und die gemeinsame Elektrode überbrückt, in Reihe geschaltet werden.

6. Bistabile Anzeige nach Anspruch 1,
**dadurch gekennzeichnet, dass**
eine erste Schicht mit einem leitfähigen Muster und eine zweite Schicht mit einem leitfähigen Muster auf dem Glas des zweiten Substrats ausgebildet sind, wobei die erste Schicht mit einem leitfähigen Muster mit einer ersten Musterelektrode verbunden ist und die zweite Schicht mit einem leitfähigen Muster mit einer zweiten Musterelektrode verbunden ist,
die Spannungsteilerschaltung ausgebildet wird, indem ein erster externer Kondensator, der die erste Musterelektrode und die zweite Musterelektrode überbrückt, ein zweiter externer Kondensator, der die zweite Musterelektrode und die Hintergrundelektrode überbrückt, und ein Plattenkondensator, der zwischen der Hintergrundelektrode und der gemeinsamen Elektrode ausgebildet ist, in Reihe geschaltet werden,
der Signalelektrodenanschluss direkt mit der ersten Musterelektrode verbunden ist und die Spannung des Ansteuersignals an die erste Musterelektrode liefert; und die erste geteilte Spannung, die nach dem Teilen der Spannung des Ansteuersignals durch den ersten externen Kondensator erhalten wird, an die zweite Musterelektrode geliefert wird, und die zweite geteilte Spannung, die nach dem Teilen der Spannung des Ansteuersignals durch den ersten externen Kondensator und den zweiten externen Kondensator erhalten wird, an die Hintergrundelektrode geliefert wird,
die Werte des ersten externen Kondensators und des zweiten externen Kondensators in der Spannungsteilerschaltung eingestellt werden, während die Spannungsamplitude des Ansteuersignals in drei oder mehr Stufen unterteilt wird, und in einem Fall, bei dem die Spannungsamplitude drei Stufen aufweist, sie als eine erste Spannung, eine dritte Spannung bzw. eine zweite Spannung in absteigender Reihenfolge eingestellt werden, wobei die dritte Spannung kleiner als die erste Spannung und größer als die erste stabile Ansteuerspannung der Anzeige ist, so dass sie zu einem der folgenden drei Fälle wird:
wenn das Ansteuersignal der Impuls der ersten Spannung ist, wird die erste Spannung direkt an die erste Musterelektrode angelegt, die an die zweite Musterelektrode angelegte Spannung ist niedriger als die erste Spannung, aber höher als die erste stabile Ansteuerspannung der Anzeige, und die an die Hintergrundelektrode angelegte Spannung ist niedriger als die erste stabile Ansteuerspannung der Anzeige und höher als die zweite stabile Ansteuerspannung der Anzeige;
wenn das Ansteuersignal der Impuls der dritten Spannung ist, wird die dritte Spannung direkt an die erste Musterelektrode angelegt, die an die zweite Musterelektrode angelegte Spannung ist niedriger als die erste stabile Ansteuerspannung der Anzeige und höher als die zweite stabile Ansteuerspannung der Anzeige, und die an die Hintergrundelektrode angelegte Spannung ist niedriger als die erste stabile Ansteuerspannung der Anzeige und höher als die zweite stabile Ansteuerspannung der Anzeige; oder
wenn das Ansteuersignal der Impuls der zweiten Spannung ist, wird die zweite Spannung direkt an die erste Musterelektrode angelegt, die an die zweite Musterelektrode angelegte Spannung ist niedriger als die erste stabile Ansteuerspannung der Anzeige und höher als die zweite stabile Ansteuerspannung der Anzeige, und die an die Hintergrundelektrode angelegte Spannung ist niedriger als die erste stabile Ansteuerspannung der Anzeige und höher als die zweite stabile Ansteuerspannung der Anzeige.

7. Ansteuerungsverfahren für die bistabile Anzeige nach einem der Ansprüche 1-6, wobei das Verfahren umfasst:
Anlegen des Ansteuersignals zwischen dem Anschluss der gemeinsamen Elektrode und dem Signalelektrodenanschluss.

## Revendications

1. Affichage bistable, comprenant :
une boîte intérieure (1) constituée d'un premier substrat (11), d'un deuxième substrat (12) et d'un corps de boîte (13) entourant un espace entre le premier substrat et le deuxième substrat,
un matériau d'affichage bistable injecté dans l'espace, et une couche conductrice d'électrode commune (14), une couche conductrice de motif (15) et une couche conductrice de fond (16) respectivement formées sur le premier substrat et/ou le deuxième substrat à l'intérieur de la boîte intérieure,
dans lequel la couche conductrice d'électrode commune est menée hors de la boîte intérieure par une électrode commune (31), la couche conductrice de motif est menée hors de la boîte intérieure par une électrode de motif (17) et la couche conductrice de fond est menée hors de la boîte intérieure par une électrode de fond (18),
dans lequel l'affichage bistable comprend en outre :
une borne d'électrode commune (3) directement connectée à l'électrode commune ; et
une borne d'électrode de signal (2) directement connectée à l'une de l'électrode de fond et de l'électrode de motif,
dans lequel l'affichage bistable est configuré pour recevoir un signal de commande incluant une impulsion d'une première tension supérieure à une première tension de commande d'état stable de l'affichage, appropriée pour commander l'affichage bistable dans un état d'affichage lumineux, et une impulsion d'une deuxième tension inférieure à la première tension de commande d'état stable de l'affichage et supérieure à une deuxième tension de commande d'état stable de l'affichage, appropriée pour commander l'affichage bistable dans un état d'affichage sombre, le signal de commande étant appliqué entre la borne d'électrode commune et la borne d'électrode de signal,
**caractérisé en ce que** :
l'une de l'électrode de fond et de l'électrode de motif, l'autre de l'électrode de fond et de l'électrode de motif et l'électrode commune sont connectées en série entre la borne d'électrode de signal et la borne d'électrode commune par l'intermédiaire d'un composant de division de tension (19) inclus dans l'affichage bistable pour former un circuit diviseur de tension, le composant de division de tension comprenant un ou plusieurs éléments parmi un condensateur externe, un condensateur interne, une résistance et un tube régulateur de tension, de sorte que, lorsque ledit signal de commande est appliqué entre la borne d'électrode commune et la borne d'électrode de signal, le signal de commande est directement appliqué à ladite une de l'électrode de fond et de l'électrode de motif, et une première tension divisée résultant de la division de tension du signal de commande par le circuit diviseur de tension est appliquée à l'autre de l'électrode de fond et de l'électrode de motif,
dans lequel la valeur du composant de division de tension dans le circuit diviseur de tension est ajustée de telle sorte que la première tension divisée appliquée à l'autre de l'électrode de fond et de l'électrode de motif soit inférieure à la première tension de commande d'état stable de l'affichage et supérieure à la deuxième tension de commande d'état stable de l'affichage lorsque le signal de commande est l'impulsion de la première tension, et que la première tension divisée appliquée à l'autre de l'électrode de fond et de l'électrode de motif soit également inférieure à la première tension de commande d'état stable de l'affichage et supérieure à la deuxième tension de commande d'état stable de l'affichage lorsque le signal de commande est l'impulsion de la deuxième tension.

2. Affichage bistable selon la revendication 1, **caractérisé en ce que**
la couche conductrice d'électrode commune est formée sur le verre du premier substrat, et la couche conductrice de motif et la couche conductrice de fond sont formées sur le verre du deuxième substrat,
le circuit diviseur de tension est formé en connectant en série un condensateur diviseur de tension connecté entre l'électrode de fond et l'électrode de motif et un condensateur à plaques formé entre l'électrode de motif et l'électrode commune,
la borne d'électrode de signal est directement connectée à l'électrode de fond et fournit la tension du signal de commande à l'électrode de fond ; et la borne d'électrode de signal est indirectement connectée à l'électrode de motif par l'intermédiaire du condensateur diviseur de tension et fournit la première tension divisée à l'électrode de motif.

3. Affichage bistable selon la revendication 1, **caractérisé en ce que**
la couche conductrice de motif est formée sur le verre du premier substrat de telle sorte qu'une partie de la zone de la couche conductrice de motif chevauche la couche conductrice de fond formée sur le verre du deuxième substrat du haut vers le bas en constituant un premier condensateur équivalent, la partie restante de la zone de la couche conductrice de motif chevauche la couche conductrice d'électrode commune formée sur le verre du deuxième substrat du haut vers le bas en constituant un deuxième condensateur équivalent, et la couche conductrice d'électrode commune sur le verre du deuxième substrat et la couche conductrice d'électrode commune sur le verre du premier substrat réalisent la conduction haut-bas par l'intermédiaire de l'adhésif conducteur sur le cadre de la boîte intérieure de l'affichage et sont toutes deux connectées à l'électrode commune,
le circuit diviseur de tension est formé en connectant en série le premier condensateur équivalent entre la couche conductrice de fond et la couche conductrice de motif et le deuxième condensateur équivalent entre la couche conductrice de motif et la couche conductrice commune.

4. Affichage bistable selon la revendication 1, **caractérisé en ce que**
la couche conductrice d'électrode commune est formée sur le verre du premier substrat et la couche conductrice de motif et la couche conductrice de fond sont formées sur le verre du deuxième substrat,
le circuit diviseur de tension est formé en connectant en série une première résistance branchée entre l'électrode de fond et l'électrode de motif et une deuxième résistance branchée entre l'électrode de motif et l'électrode commune.

5. Affichage bistable selon la revendication 1, **caractérisé en ce que**
la couche conductrice d'électrode commune est formée sur le verre du premier substrat et la couche conductrice de motif et la couche conductrice de fond sont formées sur le verre du deuxième substrat,
le circuit diviseur de tension est formé en connectant en série une troisième résistance branchée entre l'électrode de fond et l'électrode de motif et un tube régulateur de tension branché entre l'électrode de motif et l'électrode commune.

6. Affichage bistable selon la revendication 1, **caractérisé en ce que**
une première couche conductrice de motif et une deuxième couche conductrice de motif sont formées sur le verre du deuxième substrat, la première couche conductrice de motif étant connectée à une première électrode de motif et la deuxième couche conductrice de motif étant connectée à une deuxième électrode de motif,
le circuit diviseur de tension est formé en connectant en série un premier condensateur externe branché entre la première électrode de motif et la deuxième électrode de motif, un deuxième condensateur externe branché entre la deuxième électrode de motif et l'électrode de fond, et un condensateur à plaques formé entre l'électrode de fond et l'électrode commune,
la borne d'électrode de signal est directement connectée à la première électrode de motif et fournit la tension du signal de commande à la première électrode de motif ; et la première tension divisée obtenue après la division de la tension du signal de commande par le premier condensateur externe est fournie à la deuxième électrode de motif, et la deuxième tension divisée obtenue après la division de la tension du signal de commande par le premier condensateur externe et le deuxième condensateur externe est fournie à l'électrode de fond,
les valeurs du premier condensateur externe et du deuxième condensateur externe dans le circuit diviseur de tension sont ajustées en divisant l'amplitude de tension du signal de commande en 3 niveaux ou plus, et dans le cas où l'amplitude de tension est de 3 niveaux, elles sont définies respectivement comme une première tension, une troisième tension et une deuxième tension dans l'ordre décroissant, la troisième tension étant inférieure à la première tension et supérieure à la première tension de commande d'état stable de l'affichage, de sorte qu'il se produit l'un des trois cas suivants :
lorsque le signal de commande est l'impulsion de la première tension, la première tension est directement appliquée à la première électrode de motif, la tension appliquée à la deuxième électrode de motif est inférieure à la première tension mais supérieure à la première tension de commande d'état stable de l'affichage, et la tension appliquée à l'électrode de fond est inférieure à la première tension de commande d'état stable de l'affichage et supérieure à la deuxième tension de commande d'état stable de l'affichage ;
lorsque le signal de commande est l'impulsion de la troisième tension, la troisième tension est directement appliquée à la première électrode de motif, la tension appliquée à la deuxième électrode de motif est inférieure à la première tension de commande d'état stable de l'affichage et supérieure à la deuxième tension de commande d'état stable de l'affichage, et la tension appliquée à l'électrode de fond est inférieure à la première tension de commande d'état stable de l'affichage et supérieure à la deuxième tension de commande d'état stable de l'affichage ; ou
lorsque le signal de commande est l'impulsion de la deuxième tension, la deuxième tension est directement appliquée à la première électrode de motif, la tension appliquée à la deuxième électrode de motif est inférieure à la première tension de commande d'état stable de l'affichage et supérieure à la deuxième tension de commande d'état stable de l'affichage, et la tension appliquée à l'électrode de fond est inférieure à la première tension de commande d'état stable de l'affichage et supérieure à la deuxième tension de commande d'état stable de l'affichage.

7. Procédé de commande de l'affichage bistable selon l'une quelconque des revendications 1 à 6, le procédé consistant à :
appliquer ledit signal de commande entre ladite borne d'électrode commune et ladite borne d'électrode de signal.
